# EUROPÄISCHE PATENTSCHRIFT

(11) **EP 2 950 006 B1**
(45) Veröffentlichungstag und Bekanntmachung des Hinweises auf die Patenterteilung: **31.10.2018**
(21) Anmeldenummer: 15001599.8
(22) Anmeldetag: 27.05.2015
(51) Int. Cl.: F24D 3/14, F24D 19/10

(54) **RAUMTEMPERATUR-REGELUNG FÜR EINE FLÄCHENHEIZUNG**
ROOM TEMPERATURE CONTROL FOR SURFACE HEATING
RÉGLAGE DE TEMPÉRATURE AMBIANTE POUR UN CHAUFFAGE PAR LE SOL

(30) Priorität: 30.05.2014 DE 102014008319
(43) Veröffentlichungstag der Anmeldung: 02.12.2015
(73) Patentinhaber: Gabanyi, Peter, 82205 Gilching (DE); Gabanyi, Annette, 82205 Gilching (DE)
(72) Erfinder: Gabanyi, Peter, 82205 Gilching (DE)
(74) Vertreter: Stütz, Jan

(56) Entgegenhaltungen:
- EP-A1- 0 633 993
- EP-A1- 1 528 331
- EP-A1- 2 871 422
- EP-A2- 1 357 336
- EP-A2- 1 939 541
- EP-A2- 2 481 991
- WO-A2-2010/094282
- DE-A1- 3 203 964
- DE-A1- 4 124 304
- DE-A1- 19 912 588
- DE-A1-102006 054 968
- DE-B3- 10 259 279

## Beschreibung

Die Erfindung bezieht sich auf ein Verfahren zur Regelung der Temperatur von mit einer Flächenheizung, insbesondere einer Fußbodenheizung, versehenen Räumen einer Wohnung oder Raumgruppe nach dem Oberbegriff des Anspruchs 1 sowie auf ein System zur Durchführung des Verfahrens.

Moderne Heizungssysteme versorgen den mehrgeschossigen Wohnungsbau über Wohnungsstationen zur Brauchwarmwasser-Versorgung und Heizung. Jede Wohnung wird über einen Heizungsstrang mit 60-grädigem Heizwasser versorgt. Das wird primär zur salmonellenfreien Brauchwarmwasser-Bereitung benötigt. Für eine Flächenheizung in Form einer Fußbodenheizung wird das Wasser von 60° aufwendig über eine wohnungsweise außentemperaturgeführte Steuerung auf das Temperaturniveau des ungünstigsten Raumes mit der größten spezifischen Heizlast herunter geregelt.

im Gegensatz zu einer Radiatorenheizung, bei der angestrebt wird, die Speicherfähigkeit der Radiatoren durch Ausgestaltung als leichte Blechheizkörper mit kleinem Wasserinhalt so gering wie möglich zu halten und die Radiatoren dank ihrer Größenvielfalt an möglichen Bauhöhen, Längen und Bautiefen an die geforderten unterschiedlichen Heizlasten eines jeden Raumes ohne Überdimensionieren optimal anzupassen, stellt eine Fußbodenheizung eine träge Speicherheizung dar.

Die thermostatische Einzelraumregelung, die für die Fußbodenheizung,von der früheren Radiatorenheizung übernommen wurde, stellt eine Drosselschaltung dar, wie sie beispielsweise in der DE 37 08 449 A1 gezeigt ist. Um die zugeführte Wärmemenge zu reduzieren, wird die Heizwassermenge gedrosselt bzw. intervallweise abgesperrt. Das Regelprinzip ist hierbei eine konstante Heizwasser-Temperatur, die von der Außentemperatur abhängt, und eine variable Heizwassermenge für alle Räume der Wohnung. Zwischen den beiden Heizflächen Radiator und Fußbodenheizung gibt es jedoch wesentliche Unterschiede:
Die Heizfläche der Fußbodenheizung ist eine massive Estrichplatte, die von wasserführenden Rohren beheizt wird. Wenn das Thermostatventil des Raumes die Heizwasserzufuhr in die Estrichplatte unterbricht, wird die Wärmeabgabe des Estrichs an den Raum nicht unterbrochen. Die im Estrich gespeicherte Wärme wird noch Stunden an den Raum abgeben. Der Raum wird überheizt, Energie geht verloren.

Sinkt die Raumtemperatur und das Ventil öffnet wieder, so wird die Estrichplatte wieder mit Heizwasser durchflossen. Es dauert Stunden bis die gewünschte gleichmäßige Wärmeabgabe des Bodens an den Raum wieder erreicht wird.

Beim Drosseln der Heizwassermenge wird der Temperaturunterschied zwischen Heizungsvor- und Rücklauf so groß dass nur der vordere vom warmen Vorlauf durchflossene Teil des Bodens erwärmt wird. Der hintere Teil kann vom kalten Rücklauf nicht mehr beheizt werden. Ein anderes Problem ist die Anpassung der Wärmeabgabe der Heizfläche "Boden" an die geforderte Heizlast. Die Größe des Bodens (Raum) kann nicht verändert werden. Es gibt nur einen geringen Spielraum, die Wärmeabgabe des Bodens über unterschiedliche Rohrabstände (10-20cm) zu beeinflussen.

Die Vorlauftemperatur für alle Räume eines Hauses ist gleich und wird durch den Raum mit der größten spezifischen Heizlast (W/m²) bestimmt. Viele nicht so exponierte Räume sind auch beim größtmöglichen Rohrabstand überdimensioniert. Der Raumthermostat wird dauernd in kurzen Abständen öffnen und schließen. Das ist Verschwendung von Heizenergie, Komforteinbuße und bedingt erhöhte Wartungs- und Stromkosten für die Regelung.

Im Altbau oder Fertighaus werden statt Estrich häufig "Trockensystem" eingesetzt. Hier werden die Rohrschlangen in vorgefertigte Rillen einer Zement- oder Gipsfaserplatte eingebaut. Es gibt häufig nur einen möglichen Rohrabstand. Das führt bei der alten Drosselschaltung zu noch stärkerem Überdimensionieren mit den bekannten Folgen.

Bei Fußbodenheizungen ergibt sich weiterhin bei der Nachtabsenkung ein Problem aufgrund des trägen Wärmeverhaltens des Speicherestrichs der Fußbodenheizung.

Das Schließen eines Raum-Thermostatventils unterbricht zwar die Heizwasserzufuhr, dies führt jedoch erst nach Stunden zu einer wesentlichen Änderung der Wärmeabgabe. Ähnliche Verzögerungen gibt es beim Wiederaufheizen nach dieser Temperatur-Absenkphase.

Eine Nachtabsenkung kann bei Fußbodenheizungen bisher nicht sinnvoll angewendet werden. Nach einer Absenkphase müsste die individuelle Vorlauftemperatur eines Raumes oder einer Raumgruppe zum Wiederaufheizen angehoben werden, um die Raumtemperatur in einer angemessenen Zeit wieder zu erreichen. Ein individuelles Anheben der Vorlauf-Heizungswassertemperatur für einen Raum ist aber bei einer Drosselregelung durch Öffnen und Schließen eines Raum-Thermostatventils nicht möglich.
Um diese Probleme zumindest teilweise zu beseitigen, ist in der DE 196427 21 B4 als Stand der Technik eine Lösung beschrieben, bei der für konventionelle Heizkörper und Fußbodenheizungen getrennte Heizkreise von dem Heizkessel aus verwendet werden, nämlich ein Heizkreis für konventionelle Heizkörper, der mit relativ heißem Heizkesselwasser versorgt wird, und einem zweiten Heizkreis für die Fußbodenheizung, der ein Dreiwegeventil einschließt, das nur dann das heiße Wasser von dem Heizkessel in Richtung auf die Fußbodenheizungen durchlässt, wenn die Temperatur des in der Fußbodenheizung enthaltenen Wassers unter eine voreingestellte Temperatur fällt. Hierbei wird das heiße Heizkesselwasser mit dem Wasser mit niedriger Temperatur aus dem Rücklauf der Fußbodenheizung vermischt, um eine für die Fußbodenheizung geeignete Temperatur zu erreichen, wobei das Wasser in der Fußbodenleitung über eine Pumpe und eine dem Regelventil nachgeschaltete Umgehungsleitung dauernd umgewälzt wird. Die Pumpe soll hierbei ständig in Betrieb sein und eine gute Umwälzung des Wassers in der Fußbodenheizung ermöglichen. Da diese Pumpe das Wasser in allen Fußbodenheizungen umwälzen muss, ist eine relativ große und leistungsstarke Pumpe erforderlich, die das Wasser in allen Fußbodenheizungen umwälzt und eine ausreichende Menge des Rücklaufwassers aus der Fußbodenheizung über das Regelventil den heißen Heizkessel-Wasser zu mischen kann.

Aus der DE 196 44 773 A1 ist ein Heizsystem für einen einzelnen Raum bekannt, in dem ein konventioneller Heizkörper mit einer Fußbodenheizung kombiniert ist und der konventionelle Heizkörper dazu dient, die zu geringe Wärmeabgabe der Fußbodenheizung auszugleichen. Das gesamte Heizsystem wird mit einer relativ hohen, für den konventionellen Heizkörper geeigneten Temperatur gespeist, wobei von dem Heizkreis des konventionellen Heizkörpers ein Heizkreis für die Fußbodenheizung abgezweigt wird. Der abgezweigte Heizkreis für die Fußbodenheizung umfasst ebenfalls eine Pumpe zum Umwälzen des Heizwassers in dem Fußboden-Heizkreis, wobei die Pumpe im Rücklauf des Fußboden-Heizkreises angeordnet ist und ein der Pumpe nachgeschaltetes Regelventil das Verhältnis zwischen der in dem Fußboden-Heizkreis zirkulierenden Heizwassers zur Menge des in dem Rücklauf des Hochtemperatur-Heizkreises ausströmenden Rücklaufwasser und damit auch die Menge des in den Fußboden-Heizkreis neu einströmenden Hochtemperatur-Heizwassers regelt. Hierbei strömt jedoch das Hochtemperatur-Heizwasser zunächst mit der hohen Temperatur in den Anfangsteil des Fußboden-Heizkreises ein, was unerwünscht beziehungsweise nicht praktikabel ist.
EP 2 871 422 A1 beschreibt einen hydraulischen Verteiler für ein hydraulisches Heizungs- und/oder Kühlsystem. Einzelne Lastmodule können zu einem zentralen Verteiler zusammengebaut werden. Jedes Lastmodul besteht aus einer regel- und abschaltbaren Pumpe und einem Regelventil in Form eines elektrisch betriebenen Durchgangventils. Zwischen Vor- und Rücklaufleitung ist bei dieser Beimischschaltung eine Zulaufleitung vorhanden. Weitere Armaturen zum Absperren und Entlüften der Lastkreise sind in diesen Modulen - obwohl für Fußbodenheizung Plicht - nicht vorhanden.
Das in WO 2010/094282 A2 offenbarte System dient dazu, die Rücklauf-Temperatur einer Reihe von unterschiedlichen Verbraucher-Kreisen (keine Flächenheizungen einer Wohnung) über Entkopplungen und Kaskaden auf ein Minimum zu reduzieren.
EP 1 528 331 A1 betrifft die Kopplung eines Hochtemperatur-Kreises mit mehreren Niedertemperatur-Heizkreisen mit Rückführung des Rücklaufs der Niedertemperatur-Heizkreise. Die Mischung zwischen dem Wasser aus dem Hochtemperatur-Vorlauf und dem Niedertemperatur-Rücklauf erfolgt in einer Mischflasche. Der Volumenstrom des Niedertemperatur-Heizkreises wird in Abhängigkeit von der Raum-Temperatur geregelt.

Der Erfindung liegt die Aufgabe zugrunde, ein Verfahren bzw. System der eingangs genannten Art zu schaffen, das ein schnelleres Ansprechverhalten aufweist und eine individuelle Regelung der Raumtemperatur einzelner Räume und damit Energieeinsparungen ermöglicht.

Diese Aufgabe wird durch die in den Ansprüchen 1 bzw. angegebenen Merkmale gelöst.

Vorteilhafte Ausgestaltungen und Weiterbildungen der Erfindung ergeben sich aus den jeweiligen Unteransprüchen.

Bei dem erfindungsgemäßen Verfahren beziehungsweise System ist jedem Raum eine getrennte Beimischregelung zugeordnet, wobei die Höhe der Heizwasser-Temperatur des den Verteiler-Einrichtungen zugeführten Heizwassers einer Wohnung oder Raumgruppe durch den ungünstigsten Raum mit dem höchsten spezifischen Wärmebedarf (W/m²) bestimmt wird. Bei Räumen mit geringeren spezifischen Wärmebedarf wird die Wassertemperatur mit kaltem Rücklaufwasser aus der jeweiligen Fußbodenheizung des Raumes auf eine niedrigere Temperatur heruntergemischt. Eine der Heizlast entsprechende konstante Wassermenge zirkuliert permanent im Heizkreis eines jeden Raumes, wobei die individuelle Heizwasser-Temperatur eines jeden Raumes getrennt durch Beimischen des Rücklaufs aus der Fußbodenheizung erreicht wird. Der träge Heizestrich muss damit nicht mehr auskühlen und wieder aufgeheizt werden, wie dies bei einer Drosselschaltung der Fall ist. Es verändert sich nur die Temperatur des konstant durchfließenden Heizungswassers. Damit ergibt sich eine raumweise Beimischregelung.

Aus Wärmebedarf plus Heizfläche (Raum) als Vorgabe ergibt sich damit die jeweilige Heizwassertemperatur:
Da die unterschiedlichen Heizwassertemperaturen für jeden Raum individuell durch Beimischen des "kalten" Rücklaufwassers erreicht werden, gibt es keine überdimensionierten Räume mehr, wodurch Energie eingespart wird.

Durch den konstanten Heizwasserdurchfluss mit sich regelungsbedingt stetig verändernden Heizwassertemperaturen wird der Komfort erhöht und es ergibt sich keine Welligkeit der Bodentemperatur, jedoch eine niedrigere Oberflächentemperatur und eine schnellere Reaktionszeit.

Gemäß einer Ausgestaltung der Erfindung erfolgt die Beimischung des Rücklaufwassers des jeweiligen Raumes über ein Thermostat-Dreiwegeventil oder Durchgangsventil mit mechanischem oder elektrischem Antrieb.

Hierbei kann eine Einspritz- oder Beimischschaltung zum Einsatz kommen.

Die Verteilung des Heizwassers erfolgt erfindungsgemäß dezentral über Verteilleitungen mit mechanischen oder elektrisch betätigten Thermostatventilen in jedem Raum.

Der Umlauf der Heizwassers im Heizkreis in jedem Raum wird über eine jeweilige Pumpe bewirkt.

Dadurch können die Rohr-Verlegeabstände aller Räume vergrößert werden. Das spart u.a. Rohrmaterial.

Aus der Perspektive der Nachhaltigkeit werden mit dem erfindungsgemäßen Verfahren bzw. System Ressourcen, Energie- und Wartungskosten gespart und Komfort und Behaglichkeit erhöht.
Die Erfindung wird nachfolgend anhand von in der Zeichnung dargestellten Ausführungsbeispielen noch näher erläutert.
In der Zeichnung zeigen:
Figur 1 eine Ausführungsform eines nicht erfindungsgemäßen Systems mit einem zentralen Verteiler für alle Räume einer Wohnung;
Figur 2 eine Ausführungsform des erfindungsgemäßen Systems mit dezentraler Verteilung für die Räume einer Wohnung:
Figur 3 eine Ausführungsform des erfindungsgemäßen Systems für einen Raum bei dezentraler Verteilung mit jedem Raum zugeordneten Armaturenblöcken und einer Einspritzschaltung über Durchgangsventile
Figur 4 eine Ausführungsform eines nicht erfindungsgemäßen Systems für mehrere Räume bei zentraler Verteilung mit in einer Wohnungsstation anordneten Verteilerblöcken und einer Einspritzschaltung über Durchgangsventile
Figur 5 eine Ausführungsform des erfindungsgemäßen Systems für einen Raum bei dezentraler Verteilung mit jedem Raum zugeordneten Armaturenblöcken und einer Beimischschaltung über Dreiwege-Mischventile im Vorlauf:
Figur 6 eine Ausführungsform eines nicht erfindungsgemäßen Systems für mehrere Räume bei zentraler Verteilung mit in einer Wohnungsstation angeordneten Verteilerblöcken und einer Beimischschaltung über Dreiwege-Mischventile im Vorlauf:
   Figur 7 eine Ausführungsform des erfindungsgemäßen Systems für einen Raum bei dezentraler Verteilung mit jedem Raum zugeordneten Armaturenblöcken und einer Beimischschaltung über Dreiwege-Mischventile im Rücklauf:
   Figur 8 eine Ausführungsform eines nicht erfindungsgemäßen Systems für mehrere Raüme bei zentraler Verteilung mit in einer Wohnungsstation angeordneten Verteilerblöcken und einer Beimischschaltung über Dreiwege-Mischventile im Rücklauf.

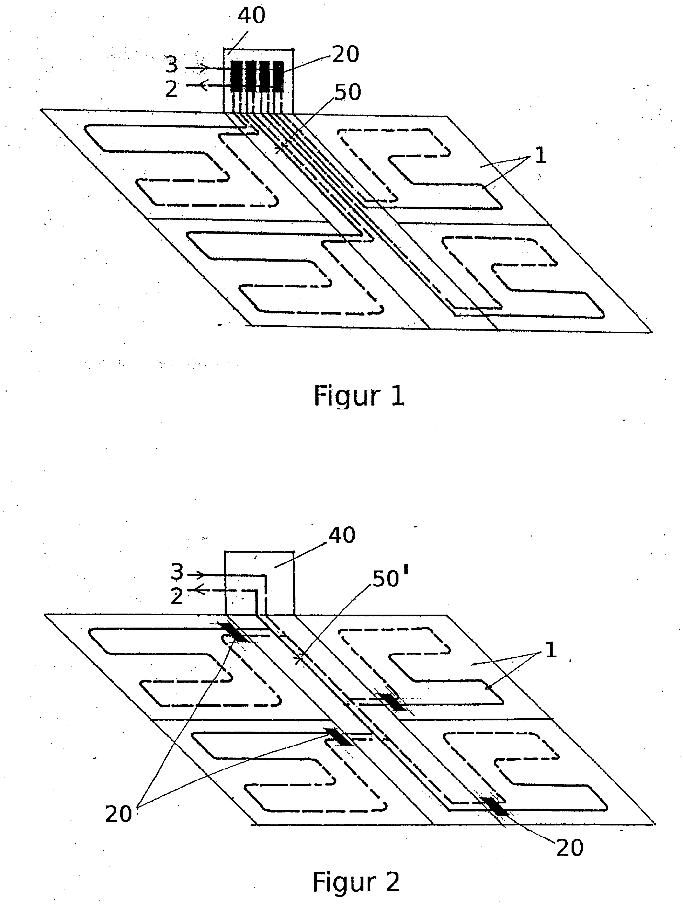

In Figur 1 ist eine Ausführungsform eines nicht erfindungsgemäßen Systems mit einem zentralen Verteiler für beispielsweise vier Räume einer Wohnung gezeigt, die nur schematisch angedeutet sind und jeweils eine Fußbodenheizung 1 oder andere Flächenheizung aufweisen.
Der zentrale Verteiler kann beispielsweise in einer Wohnungsstation 40 angeordnet und mit dieser kombiniert sein.
An dem zentralen Verteiler sind entsprechend vier Armaturenblöcke 20 angeordnet, von denen jeweils einer der Fußbodenheizung 1 in einem einzelnen Raum zugeordnet ist. Die Armaturenblöcke 20 sind alle über den zentralen Verteiler mit einer Haupt-Heizwasser-Vorlaufleitung 3 und einer Haupt-Heizwasser-Rücklaufleitung 2 für ein gesamtes Gebäude oder eine Wohnungseinheit verbunden.

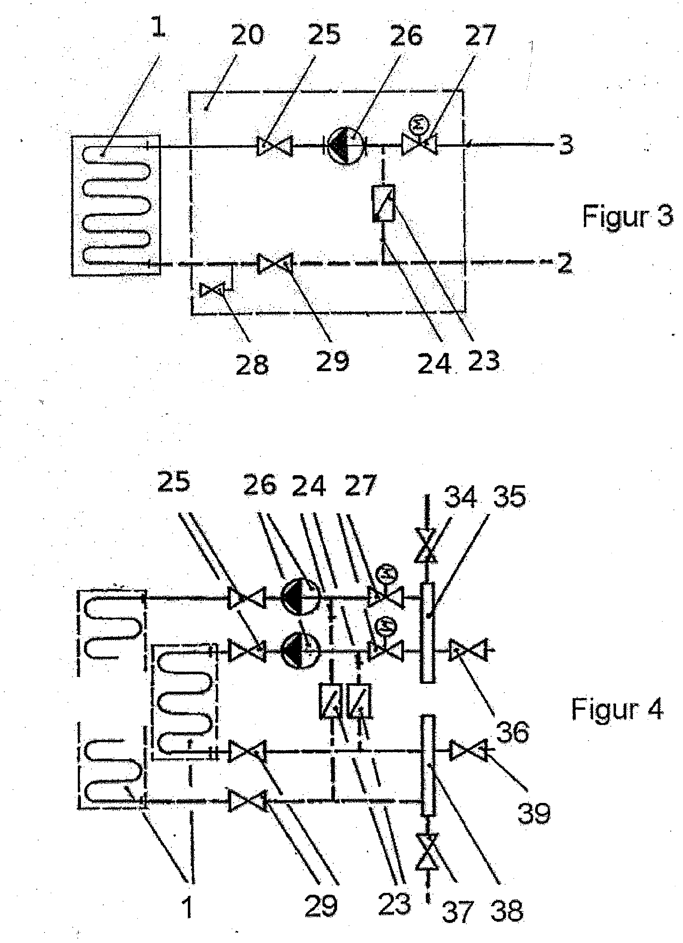

Mögliche Ausführungsformen der Armaturenblöcke 20 werden nachfolgend anhand der Figuren 3 bis 8 noch näher erläutert.
Von den einzelnen Armaturenblöcken 20 laufen insgesamt mit 50 bezeichnete getrennte Vorlauf- und Rücklaufleitungen zu den Fußbodenheizungen 1 der einzelnen Räume.
In Figur 2 ist eine Ausführungsform des erfindungsgemäßen Systems gezeigt, bei der ebenfalls vier Räume einer Wohnung gezeigt sind, die nur schematisch angedeutet sind und jeweils eine Fußbodenheizung 1 oder andere Flächenheizung aufweisen.
Bei dieser Ausführungsform ist ein jeweiliger Armaturenblock 20 in jedem Raum oder benachbart zu diesem angeordnet und zugeordnet. Die Haupt-Heizwasser-Vorlaufleitung 3 und die Haupt-Heizwasser-Rücklaufleitung 2 der Wohnungseinheit sind ausgehend von der Wohnungsstation 40 über Verteilleitungen 50' mit den einzelnen Armaturenblöcken 20 verbunden.

In Figur 3 ist eine Ausführungsform des erfindungsgemäßen Systems für einen Raum bei dezentraler Verteilung mit jedem Raum zugeordneten Armaturenblöcken 20 und einer Einspritzschaltung über Durchgangsventile 27 gezeigt.

Der jeweilige Armaturenblock 20 ist über im Normalbetrieb offene Absperrventile 25, 29 mit der Fußbodenheizung 1 des Raumes verbunden.

Die Haupt-Vorlauf- und Rücklaufleitungen 3, 2 sind über die in Figur 3 nicht gezeigten Veteilleitungen 50' nach Figur 2 an den Armaturenblock 20 angeschlossen. Die Haupt-Vorlaufleitung 3 ist über ein von Hand oder motorisch und gegebenenfalls fernsteuerbares Raumtemperatur-Regelventil 27 mit dem Eingang einer hocheffizienten Umwälzpumpe 26 verbunden, deren Ausgang über das Absperrventil 25 mit dem Vorlauf der Fußbodenheizung 1 verbunden ist.

Der Rücklauf der Fußbodenheizung 1 ist über das weitere Absperrventil 29 und eine Umlaufleitung 24 ebenfalls mit dem Eingang der Pumpe 26 verbunden. Die Umlaufleitung 24 enthält gegebenenfalls ein sich zur Pumpe 26 hin öffnendes Rückschlagventil.

Die Pumpe 26 saugt in Abhängigkeit von Einstellung des Regelventils 27 eine größere oder kleinere Menge des Rücklaufwassers von der Fußbodenheizung 1 an, wobei in einem Extremfall das Regelventil 27 vollständig geschlossen ist und die Pumpe 26 das in der Fußbodenheizung enthaltene Wasser lediglich zirkulieren lässt, während im anderen Extremfall das Regelventil 27 vollständig geöffnet ist und die Pumpe 26 lediglich Heizwasser aus der Haupt-Vorlaufleitung 3 ansaugt und das von der Fußbodenheizung 1 zurück strömende Heizungswasser an die Haupt-Rücklaufleitung 2 zurück geleitet wird.

Die für jeden Raum individuell errechnete Wassermenge zirkuliert damit permanent durch den Verbraucherkreis in Form der Fußbodenheizung 1. Das Raumtemperatur-Regelventil 27 verändert nur die Heizungswassertemperatur und somit die Wärmeabgabe des Bodens. Das Verhältnis von warmem Vorlaufwasser von der Haupt-Vorlaufleitung 3 zu kaltem Rücklaufwasser von der Umlaufleitung 24 verändert sich in Abhängigkeit der gemessenen Raumtemperatur, die den Antrieb am Regelventil 27 betätigt
Die Absperrventile 25, 29, die Pumpe 26 das Regelventil 27 und das Rückschlagventil 23 sowie gegebenenfalls ein Entlüftungsventil 28 können zu einem einzigen Armaturenblock 20 vereinigt werden, wodurch der Montageaufwand und der Raumbedarf verringert wird
Wie dies bei der Ausführungsform nach Figur 4 in Verbindung mit Figur 1 gezeigt ist, können die Armaturenblöcke 20 für die einzelnen Räume auch in einer Wohnungsstation 40 vereinigt werden. Hierbei wird die Haupt-Vorlaufleitung 3 über ein Absperrventil 34 mit einem Vorlauf-Verteiler 35 verbunden, an die die einzelnen Armaturenblöcke 20 angeschlossen sind, während die Haupt-Rücklaufleitung 2 über ein Absperrventil 37 mit einem Rücklauf-Verteiler 38 für die einzelnen Armaturenblöcke verbunden ist.
In Figur 4 sind lediglich zwei Heizkreise gezeigt. Weitere Heizkreise können an die Verteiler 35, 38 angeschlossen werden. Entlüftungsventile 36, 39 können in der Wohnungsstation 40 selbst angeordnet werden.

Bei der anhand der Figuren 3 und 4 beschriebenen raumweisen Beimischregelung wird die Heizwassertemperatur in der Fußbodenheizung dem Wärmebedarf angepasst, nicht jedoch die durch die Fußbodenheizung 1 zirkulierende Wassermenge, die bei der beschriebenen Ausführungsform weitgehend konstant und durch die Pumpe 26 bestimmt ist.
Damit kann auch eine raumweise Nachtabsenkung sinnvoll angewendet werden. Nach einer Absenkphase kann die individuelle Vorlauftemperatur der eines Raumes zum Wiederaufheizen angehoben werden, um die gewünschte Raumtemperatur in einer angemessenen Zeit wieder zu erreichen. Bei allen von der Nachtabsenkung nicht betroffenen Räumen wird automatisch durch die "raumweise Beimischung" kälteren Rücklaufwassers die Heizungswassertemperatur auf altem Niveau erhalten.

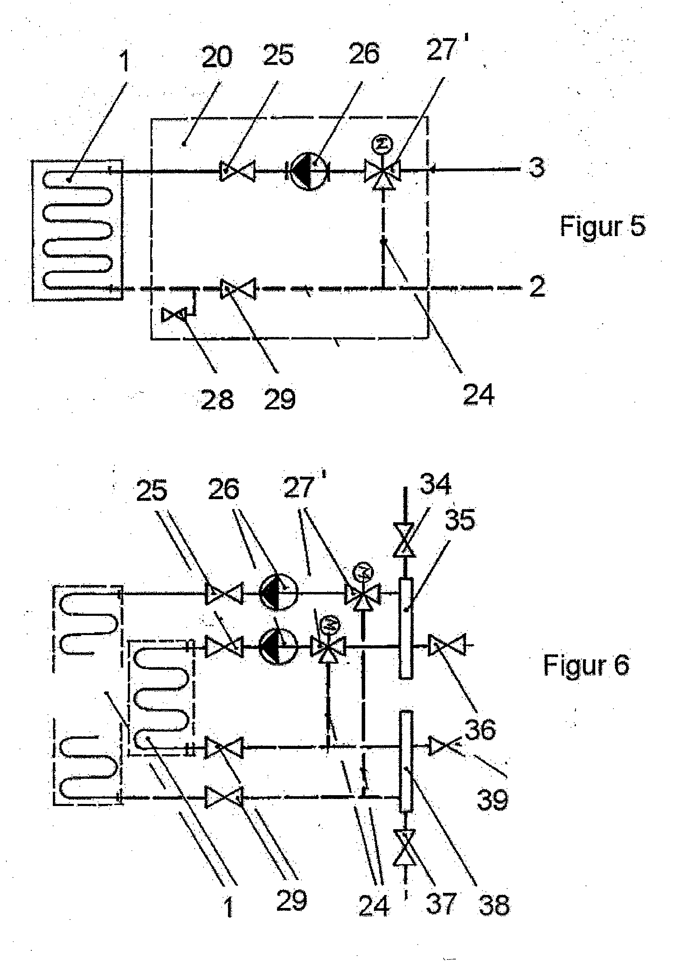

Die in den Figuren 5 und 6 gezeigten Ausführungsformen unterscheiden sich von den Ausführungsformen nach den Figuren 3 und 4 dadurch, dass anstelle des einfachen Durchgangsventils für das Regelventil 27 ein Dreiwege-Mischventil 27' eingesetzt wird. Dieses Dreiwege-Mischventil 27' weist mit der Haupt-Vorlaufleitung 3 bzw. dem Vorlauf-Verteiler 35 verbundenen Eingang, einen mit dem Absperrventil 29 über eine Umlaufleitung 24 verbundenen-Eingang sowie einen mit der Pumpe 26 verbundenen Ausgang auf und regelt in einstellbarer Weise das Verhältnis von dem Vorlauf der Fußbodenheizung zugeführtem Heizungswasser von der Haupt-Vorlaufleitung 3 zu dem über die Umlaufleitung 24 zurückgeführten kälterem Wasser und damit die Temperatur des durch die Fußbodenheizung 1 strömenden Wassers, dessen pro Zeiteinheit umgewälzte Menge jedoch im Wesentlichen konstant ist.

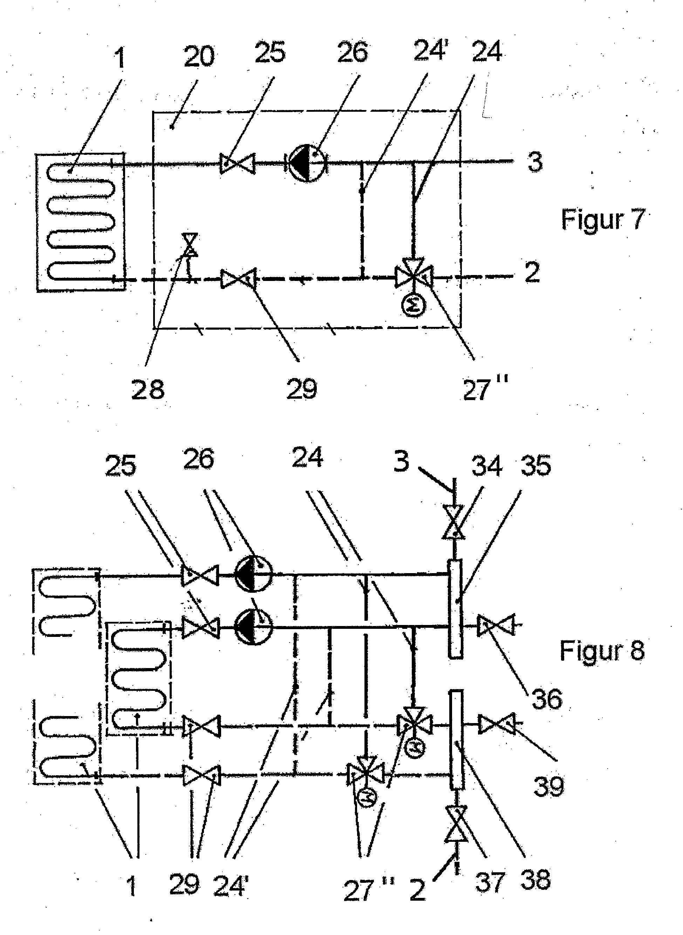

Während in den Figuren 5 und 6 das Dreiwege-Mischventil 27' in der Vorlaufleitung angeordnet ist, ist es in gleicher Weise möglich, ein Dreiwege-Mischventil 27" in der Rücklaufleitung von dem Absperrventil 29 anzuordnen, wie dies in den Figuren 7 und 8 gezeigt ist. Dieses Dreiwege-Mischventil 27" weist einen mit der Rücklaufleitung von der Fußbodenheizung 1 verbundenen Eingang, einen ersten Ausgang, der über eine Umlaufleitung 24 mit dem Eingang der Pumpe 26 verbunden ist, und einen zweiten Ausgang auf, der mit der Haupt-Rücklaufleitung 2 verbunden sind. Aus hydraulischen Gründen kann noch ein Bypass 24' zwischen der Rücklaufleitung von der Fußbodenheizung 1 und dem Eingang ger Pumpe 26 vorgesehen sein. Auf diese Weise wird eine Beimischregelung in Form einer Beimischschaltung geschaffen.

Selbstverständlich sind auch andere Regelschaltungen denkbar, die eine raumweise Beimischung des von der Fußbodenheizung 1 oder einer anderen Flächenheizung zurück strömenden Rücklaufwassers zu dem von der Haupt-Vorlaufleitung 3 kommenden Heizwasser ermöglichen.

Allgemein bekannte Schaltungen sind insgesamt beispielsweise neben der Einspritzschaltung mit Durchgangsventil, der Beimischschaltung mit Dreiwegemischer und der Einspritzschaltung mit Dreiwegeventil eine Doppel-Beimischschaltung mit Dreiwegemischer und Fixbypass oder eine Umlenkschaltung mit Dreiwegemischer.

Wesentlich ist lediglich, dass durch diese raumweisen Beimischregelungen die Heizungswassertemperatur in der Fußbodenheizung an den Wärmebedarf des Raumes angepasst wird, nicht jedoch die durch die Flächenheizung in Form der Fußbodenheizung 1 zirkulierende Wassermenge, die bei dem erfindungsgemäßen Verfahren bzw. System weitgehend konstant und hauptsächlich durch die Pumpe 26 bestimmt ist

Die hierbei verwendeten Regelventile, wie das Durchangsventil 27 oder die Dreiwege-Mischventile 27' oder 27" können entweder mechanisch, manuell oder durch einen elektrischen Antrieb betätigt werden, wobei selbstverständlich neben oder zusätzlich zu einer von der Raumtemperatur abhängigen Steuerung auch eine Fernsteuerung und/oder Zeitsteuerung möglich ist.

## Patentansprüche

1. Verfahren zur Regelung der Temperatur von mit einer Flächenheizung (1), insbesondere einer Fußbodenheizung, versehenen Räumen einer Wohnung oder Raumgruppe, bei dem eine Haupt-Heizwasser-Vorlaufleitung (3) und eine Haupt-Heizwasser-Rücklaufleitung (2) über Verteilleitungen (50') mit den Beimisch-Schaltungen der einzelnen Räume einer Wohnung oder Raumgruppe verbunden wird, wobei die Höhe der Heizwassertemperatur des den Verteiler-Einrichtungen der Wohnung oder Raumgruppe zugeführten Heizwassers in Abhängigkeit von dem ungünstigsten Raum mit dem höchsten spezifischen Wärmebedarf bestimmt wird, dass jedem Raum eine eigene mit den der Wohnung oder Raumgruppe zugeordneten Verteiler-Einrichtungen verbundene Beimisch-Schaltung zugeordnet wird, die derart ausgebildet ist, dass dem der Flächenheizung (1) von den Verteilleitungen (50') zugeführten Heizwasser eine regelbare Menge des von der jeweiligen Flächenheizung (1) zurück strömenden kälteren Rücklaufwassers beimischbar ist, um die Temperatur des in die Flächenheizung (1) einströmenden Wassers auf einem gewünschten Wert zu halten, **dadurch gekennzeichnet, dass** das die Flächenheizung (1) durchströmende Wasser dauernd von einer Umwälzpumpe (26) mit einer der Heizlast eines Raumes entsprechenden, im Wesentlichen konstanten Menge permanent in Zirkulation versetzt wird, wobei die Verteilung des Heizwassers dezentral über VerteilLeitungen(50')zu den raumweise zugeordneten Armaturenblöcken (20) erfolgt, die als integrale Armaturen mit Pumpe (26), Absperr- (25,29), Entlüftungs-(28) und mechanisch oder elektrisch angetriebenem Temperatur-Regelventil (27,27',27") ausgebildet sind.

2. Verfahren nach Anspruch 1, **dadurch gekennzeichnet, dass** für jeden Raum zwischen der Haupt-Heizwasser-Vorlaufleitung (3) und der Umwälzpumpe(26) als Temperatur-Regelventil ein Durchgangs-Regelventil (27) eingeschaltet wird, und dass das Rücklaufwasser von der Flächenheizung (1) über eine Umlaufleitung (24) an der Verbindungsstelle zwischen dem Durchgangs-Regelventil (27) und der Umwälzpumpe (26) eingeleitet wird.

3. Verfahren nach Anspruch 1, **dadurch gekennzeichnet, dass** für jeden Raum zwischen der Haupt-Heizwasser-Vorlaufleitung (3) und der Umwälzpumpe (26) als Temperatur-Regelventil ein Dreiwege-Mischventil (27') eingeschaltet wird, dass das Rücklaufwasser von der Flächenheizung (1) einem ersten Eingang des Dreiwege-Mischventils (27') über eine Umlaufleitung (24) zugeführt wird, dass das Heizwasser von der Haupt-Heizwasser-Vorlaufleitung (3) einem zweiten Eingang des Dreiwege-Mischventils zugeführt wird, und dass der Ausgang der Umwälzpumpe mit dem Vorlauf-Anschluss der Flächenheizung (1) verbunden ist.

4. Verfahren nach Anspruch 1, **dadurch gekennzeichnet, dass** die Haupt-Heizwasser-Vorlaufleitung (3) mit dem Eingang der Umwälzpumpe (26) verbunden wird, deren Ausgang mit dem Vorlauf der Flächenheizung (1)verbunden ist, dass zwischen dem Rücklauf der Flächenheizung (1) und der Haupt-Heizwasser-Rücklaufleitung (2) als Temperatur-Regelventil ein Dreiwege-Mischventil (27") eingeschaltet wird, dass das Rucklaufwasser von der Flächenheizung (1) einem Eingang des Dreiwege-Mischventils (27") zugeführt wird, dass ein erster Ausgang des Dreiwege-Mischventils mit der Haupt-Heizwasser-Rücklaufleitung (2) verbunden wird, und dass ein zweiter Ausgang des Dreiwege-Mischventil über eine Umlaufleitung (24) mit dem Eingang der Umwälzpumpe (26) verbunden wird.

5. System zur Regelung der Temperatur eines Raumes mit einer Flächenheizung (1), wobei das System eine Flächenheizung (1) mit Verteiler-Einrichtungen zur Verbindung der Flächenheizungen (1) einzelner Räume einer Wohnung oder Raumgruppe mit einer Haupt-Heizwasser-Vorlaufleitung (3) und einer Haupt-Heizwasser-Rücklaufleitung (2) aufweist, wobei die Höhe der Heizwassertemperatur des den Verteiler-Einrichtungen der Wohnung oder Raumgruppe zugeführten Heizwassers in Abhängigkeit von dem ungünstigsten Raum mit dem höchsten spezifischen Wärmebedarf bestimmt ist, dass die Flächenheizungen (1) jedes einzelnen Raumes mit einer der Wohnung oder Raumgruppe zugeordneten VerteilerEinrichtung über getrennte Temperatur-Regelventil-Einrichtungen (27, 27', 27") verbunden sind, die derart ausgebildet sind, dass sie das Beimischen einer regelbaren Menge des von dem Rücklauf der Flächenheizung (1) über eine Umlaufleitung (24) zurück strömenden Rucklaufwassers zu dem in die Flächenheizung des Raumes einströmenden Heizwasser ermöglichen, **dadurch gekennzeichnet, dass** das System eine Umwälzpumpe (26) aufweist, die zum dauernden Umwälzen des Heizwassers durch die Flächenheizung (1) mit einer im wesentlichen konstanten Menge, jedoch durch die Beimischung veränderlichen Temperatur ausgebildet ist, wobei die Verteilung des Heizwassers dezentral über Verteilleitungen(50')zu den raumweise zugeordneten Armaturenblöcken (20) erfolgt, die als integrale Armaturen mit Pumpe (26), Absperr- (25,29), Entlüftungs-(28) und mechanisch oder elektrisch angetriebenen Temperatur-Regelventil (27,27',27") ausgebildet sind.

6. System nach Anspruch 5, **dadurch gekennzeichnet, dass** zwischen der Haupt-Heizwasser-Vorlaufleitung (3) und der Umwälzpumpe als Temperatur-Regelventil ein Durchgangs-Regelventil (27) eingeschaltet ist und das zwischen der Haupt-Heizwasser-Rücklaufleitung (2) und der Rücklaufleitung der Flächenheizung eine Umlaufleitung (24) abgezweigt ist, die in die Verbindungsstelle zwischen dem Durchgang-Regelventil (27) und der Umwälzpumpe (26) mündet.

7. System nach Anspruch 5, **dadurch gekennzeichnet, dass** zwischen der Haupt-Heizwasser-Vorlaufleitung (3) und der Umwälzpumpe (26) als Temperatur-Regerventil ein Dreiwege-Mischventil (27') eingeschaltet ist, dass die mit der Haupt-Heizwasser-Rücklaufleitung (2) verbundenen Rücklaufleitung der Flächenheizung (1) mit einem ersten Eingang des Dreiwege-Mischventils (27') über eine Umlaufleitung (24) verbunden ist, dass die Haupt-Heizwasser-Vorlaufleitung (3) mit einem zweiten Eingang des Dreiwege-Mischventils verbunden ist, und dass der Ausgang des Dreiwege-Mischventils mit dem Eingang der Umwälzpumpe (26) verbunden ist.

8. System nach Anspruch 5, **dadurch gekennzeichnet, dass** die Haupt-Heizwasser-Vorlaufleitung (3) mit dem Eingang der Umwälzpumpe (26) verbunden ist, deren Ausgang mit dem Vorlauf der Flächenheizung (1) verbunden ist, dass zwischen dem Rücklauf der Flächenheizung (1) und der Haupt-Heizwasser-Rücklaufleitung (2) als Temperatur-Regelventil ein Dreiwege-Mischventil (27") eingeschaltet ist, dass die Rücklaufleitung der Flächenheizung (1) mit einem Eingang des Dreiwege-Mischventils verbunden ist, und dass ein erster Ausgang des Dreiwege-Mischventils (27") mit der Haupt-Heizwasser-Rücklaufleitung (2) verbunden ist und ein zweiter Ausgang des Dreiwege-Mischventils (27") über eine Umlaufleitung (24) mit dem Eingang der Umwälzpumpe (26) verbunden ist.

## Claims

1. A method for controlling the temperature of rooms of a dwelling or set of rooms provided with a surface heating system (1), in particular an underfloor heating system, in which a main hot water supply line (3) and a main hot water return line (2) are connected via distribution lines (50') to the admixing circuits of the individual rooms of a dwelling or set of rooms, wherein the level of the hot water temperature of the hot water supplied to the distribution devices of the dwelling or set of rooms is determined according to the least comfortable room with the highest specific heat requirement, in that a separate admixing circuit connected to the distribution devices which are assigned to the dwelling or set of rooms is assigned to each room, said admixing circuit being configured such that a controllable quantity of cooler return water flowing back from the respective surface heating system (1) is able to be mixed with the hot water supplied to the surface heating system (1) from the distribution lines (50'), in order to keep the temperature of the water flowing into the surface heating system (1) at a desired value, **characterised in that** the water flowing through the surface heating system (1) is permanently set in circulation by a circulating pump (26) with a substantially constant quantity corresponding to the heating load of a room, wherein the distribution of the hot water takes place in a decentralised manner via distribution lines (50') to the armature blocks (20) which are assigned to each room and which are configured as integral armatures with a pump valve (26), a non-return valve (25, 29), a ventilating valve (28) and a mechanically or electrically driven temperature control valve (27, 27', 27").

2. The method according to claim 1, **characterised in that** for each room a straight-way control valve (27) is connected between the main hot water supply line (3) and the circulating pump (26) as a temperature control valve and **in that** the return water is introduced from the surface heating system (1) via a circulation line (24) at the connecting point between the straight-way control valve (27) and the circulating pump (26).

3. The method according to claim 1, **characterised in that** for each room a three-way mixing valve (27') is connected between the main hot water supply line (3) and the circulating pump (26) as a temperature control valve, **in that** the return water is supplied from the surface heating system (1) to a first inlet of the three-way mixing valve (27') via a circulation line (24), **in that** the hot water is supplied from the main hot water supply line (3) to a second inlet of the three-way mixing valve, and **in that** the outlet of the circulating pump is connected to the supply connection of the surface heating system (1).

4. The method according to claim 1, **characterised in that** the main hot water supply line (3) is connected to the inlet of the circulating pump (26), the outlet thereof being connected to the supply of the surface heating system (1), **in that** a three-way mixing valve (27") is connected between the return of the surface heating system (1) and the main hot water return line (2) as a temperature control valve, **in that** the return water is supplied from the surface heating system (1) to an inlet of the three-way mixing valve (27"), **in that** a first outlet of the three-way mixing valve is connected to the main hot water return line (2), and **in that** a second outlet of the three-way mixing valve is connected via a circulation line (24) to the inlet of the circulating pump (26).

5. A system for controlling the temperature of a room with a surface heating system (1), wherein the system comprises a surface heating system (1) with distribution devices for connecting the surface heating systems (1) of individual rooms of a dwelling or set of rooms to a main hot water supply line (3) and a main hot water return line (2), wherein the level of the hot water temperature of the hot water supplied to the distribution devices of the dwelling or set of rooms is determined according to the least comfortable room with the highest specific heat requirement, in that the surface heating systems (1) of each individual room are connected to a distribution device assigned to the dwelling or set of rooms, via separate temperature control valve devices (27, 27', 27"), which are configured such that they permit the admixing of a controllable quantity of the return water flowing back from the return of the surface heating system (1) via a circulation line (24) to the hot water flowing into the surface heating system of the room, **characterised in that** the system comprises a circulating pump (26) which is configured for permanently circulating the hot water through the surface heating system (1) at a substantially constant quantity but at a temperature which is able to be changed by the admixing, wherein the distribution of the hot water takes place in a decentralised manner via distribution lines (50') to the armature blocks (20) which are assigned to each room and which are configured as integral armatures with a pump valve (26), a non-return valve (25, 29), a ventilating valve (28) and a mechanically or electrically driven temperature control valve (27, 27', 27").

6. The system according to claim 5, **characterised in that** a straight-way control valve (27) is connected between the main hot water supply line (3) and the circulating pump as a temperature control valve, and **in that** a circulation line (24) is branched off between the main hot water return line (2) and the return line of the surface heating system, said circulation line feeding into the connecting point between the straight-way control valve (27) and the circulating pump (26).

7. The system according to claim 5, **characterised in that** a three-way mixing valve (27') is connected between the main hot water supply line (3) and the circulating pump (26) as a temperature control valve, **in that** the return line of the surface heating system (1) connected to the main hot water return line (2) is connected to a first inlet of the three-way mixing valve (27') via a circulation line (24), **in that** the main hot water supply line (3) is connected to a second inlet of the three-way mixing valve, and **in that** the outlet of the three-way mixing valve is connected to the inlet of the circulating pump (26).

8. The system according to claim 5, **characterised in that** the main hot water supply line (3) is connected to the inlet of the circulating pump (26), the outlet thereof being connected to the supply of the surface heating system (1) and **in that** a three-way mixing valve (27") is connected between the return of the surface heating system (1) and the main hot water return line (2) as a temperature control valve, **in that** the return line of the surface heating system (1) is connected to an inlet of the three-way mixing valve, and **in that** a first outlet of the three-way mixing valve (27") is connected to the main hot water return line (2) and a second outlet of the three-way mixing valve (27") is connected via a circulation line (24) to the inlet of the circulating pump (26).

## Revendications

1. Procédé, destiné à réguler la température de pièces d'un logement ou de groupes de pièces munis d'un chauffage de surfaces (1), notamment d'un chauffage au sol, lors duquel on assemble un aller principal d'eau de chauffage (3) et un conduit retour principal d'eau de chauffage (2) par l'intermédiaire de conduits distributeurs (50') avec les circuits mélangeurs des pièces individuelles d'un logement ou d'un groupe de pièces, la hauteur de la température d'eau de chauffage de l'eau de chauffage alimentée vers les systèmes distributeurs du logement ou du groupe de pièces étant déterminée en fonction de la pièce la moins favorable faisant preuve du besoin de chauffage le plus élevé, à chaque pièce étant affecté un propre circuit mélangeur relié avec les systèmes distributeurs affectés au logement ou au groupe de pièces qui est conçu de telle sorte qu'à l'eau de chauffage alimentée vers le chauffage de surface (1) par les conduits distributeurs (50') puisse être mélangée une quantité régulable de l'eau de retour plus froide, refluant du chauffage de surface (1) en question, pour maintenir la température de l'eau affluant dans le chauffage de surface (1) à une valeur souhaitée, **caractérisé en ce que** l'eau circulant à travers le chauffage de surface (1) est amenée en continu en circulation permanente par une pompe de recirculation (26) dans une quantité sensiblement constante, correspondant à la charge de chauffage d'une pièce, la distribution de l'eau de chauffage s'effectuant de manière décentralisée, par l'intermédiaire de conduits distributeurs (50') vers les blocs de robinets (20) affectés pièce par pièce qui sont conçus sous la forme de robinets individuels, avec pompe (26), vanne de blocage (25, 29), vanne de purge (28) et vanne de régulation de température (27, 27', 27"), à entraînement mécanique ou électrique.

2. Procédé selon la revendication 1, **caractérisé en ce que** pour chaque pièce, on met en route entre le conduit aller d'eau de chauffage principal (3) et la pompe de recirculation (26) en tant que vanne de régulation de température une vanne de régulation à passage droit (27) et **en ce qu'**on introduit l'eau de retour du chauffage de surface (1) via une boucle de circulation (24) au point d'assemblage entre la vanne de régulation à passage droit (27) et la pompe de recirculation (26).

3. Procédé selon la revendication 1, **caractérisé en ce que** pour chaque pièce, on met en route entre le conduit aller d'eau de chauffage principal (3) et la pompe de recirculation (26) en tant que vanne de régulation de température une vanne mélangeuse à trois voies (27'), **en ce qu'**on alimente l'eau de retour du chauffage de surface (1) vers une première entrée de la vanne mélangeuse à trois voies (27') par l'intermédiaire d'une boucle de circulation (24), **en ce qu'**à partir du conduit aller principal d'eau de chauffage (3), on alimente l'eau de chauffage vers une deuxième sortie de la vanne mélangeuse à trois voies, et **en ce que** la sortie de la pompe de recirculation est reliée avec le branchement aller du chauffage de surface (1).

4. Procédé selon la revendication 1, **caractérisé en ce qu'**on relie le conduit aller principal d'eau de chauffage (3) avec l'entrée de la pompe de recirculation (26), dont la sortie est reliée avec le circuit aller du chauffage de surface (1), **en ce qu'**entre le circuit retour du chauffage de surface (1) et le conduit retour principal d'eau de chauffage (2), on met en route en tant que vanne de régulation de température une vanne mélangeuse à trois voies (27"), **en ce que** l'eau de retour du chauffage de surface (1) est alimentée vers une entrée de la vanne mélangeuse à trois voies (27"), **en ce qu'**on relie une première sortie de la vanne mélangeuse à trois voies avec le conduit retour principal d'eau de chauffage (2) et **en ce qu'**on relie une deuxième sortie de la vanne mélangeuse à trois voies par l'intermédiaire d'une boucle de circulation (24) avec l'entrée de la pompe de recirculation (26).

5. Système, destiné à réguler la température d'une pièce à l'aide d'un chauffage de surface (1), le système comportant un chauffage de surface (1) muni de systèmes distributeurs, destinés à relier les chauffages de surface (1) de pièces individuelles d'un logement ou d'un groupe de pièces avec un conduit aller principal d'eau de chauffage (3) et un conduit retour principal d'eau de chauffage (2), la hauteur de la température d'eau de chauffage de l'eau de chauffage alimentée vers les systèmes distributeurs du logement ou du groupe de pièces étant déterminée en fonction de la pièce la moins favorable faisant preuve du besoin de chauffage le plus élevé, en ce que les chauffages de surface (1) de chaque pièce individuelle sont reliés avec un système distributeur affecté au logement ou au groupe de pièces par l'intermédiaire de système de vannes de régulation de température (27, 27', 27") qui sont conçus de sorte à permettre l'ajout par mélange d'une quantité régulable de l'eau de retour refluant du circuit retour du chauffage de surface (1) par l'intermédiaire d'une boucle de circulation (24) à l'eau de chauffage affluant dans le chauffage de surface de la pièce, **caractérisé en ce que** le système comporte une pompe de recirculation (26) qui est conçue pour le brassage durable de l'eau de chauffage à travers le chauffage de surface (1), dans une quantité sensiblement constante, mais à une température variable du fait de l'ajout par mélange, la distribution de l'eau de chauffage s'effectuant de manière décentralisée par l'intermédiaire de conduits distributeurs (50') vers les blocs de robinets (20) affectés pièce par pièce, qui sont conçus sous la forme de robinets individuels, avec pompe (26), vanne de blocage (25, 29), vanne de purge (28) et vanne de régulation de température (27, 27', 27"), à entraînement mécanique ou électrique.

6. Système selon la revendication 5, **caractérisé en ce qu'**entre le conduit aller principal d'eau de chauffage (3) et la pompe de recirculation est mise en route en tant en tant que vanne de régulation de température une vanne de régulation à passage droit (27) et **en ce qu'**entre le conduit retour principal d'eau de chauffage (2) et le conduit retour du chauffage de surface est dérivée une boucle de circulation (24) qui débouche au point d'assemblage entre la vanne de régulation à passage droit (27) et la pompe de recirculation (26).

7. Système selon la revendication 5, **caractérisé en ce qu'**entre le conduit aller principal d'eau de chauffage (3) et la pompe de recirculation (26) est mise en route en tant que vanne de régulation de température une vanne mélangeuse à trois voies (27'), **en ce que** le conduit retour du chauffage de surface (1) relié avec le conduit retour principal d'eau de chauffage (2) est relié avec une première entrée de la vanne mélangeuse à trois voies (27') par l'intermédiaire d'une boucle de circulation (24), **en ce que** le conduit aller principal d'eau de chauffage (3) est relié avec une deuxième entrée de la vanne mélangeuse à trois voies et **en ce que** la sortie de la vanne mélangeuse à trois voies est reliée avec l'entrée de la pompe de recirculation (26).

8. Système selon la revendication 5, **caractérisé en ce que** le conduit aller principal d'eau de chauffage (3) est relié avec l'entrée de la pompe de recirculation (26) dont la sortie est reliée avec le circuit aller du chauffage de surface (1), **en ce qu'**entre le circuit retour du chauffage de surface (1) et le conduit retour principal d'eau de chauffage (2) est mis en route en tant que vanne de régulation de température une vanne mélangeuse à trois voies (27"), **en ce que** le conduit retour du chauffage de surface (1) est relié avec une entrée de la vanne mélangeuse à trois voies et **en ce qu'**une première sortie de la vanne mélangeuse à trois voies (27") est reliée avec le conduit retour principal d'eau de chauffage (2) et une deuxième sortie de la vanne mélangeuse à trois voies (27") est reliée par l'intermédiaire d'une boucle de circulation (24) avec l'entrée de la pompe de recirculation (26).
